# EUROPÄISCHE PATENTSCHRIFT

(11) **EP 3 693 261 B1**
(45) Veröffentlichungstag und Bekanntmachung des Hinweises auf die Patenterteilung: **17.01.2024**
(21) Anmeldenummer: 20155976.2
(22) Anmeldetag: 06.02.2020
(51) Int. Cl.: B63B 35/44, B63B 1/04, B63B 1/10

(54) **OFFSHORE-SOLARANLAGENFELD UND EIN VERFAHREN ZU DESSEN AUFBAU**
OFFSHORE SOLAR ARRAY AND A METHOD OF CONSTRUCTING THE SAME
CHAMP D'INSTALLATION SOLAIRE EN MER ET SON PROCÉDÉ DE MONTAGE

(30) Priorität: 08.02.2019 DE 102019103224
(43) Veröffentlichungstag der Anmeldung: 12.08.2020
(73) Patentinhaber: Tractebel Overdick GmbH, 20457 Hamburg (DE)
(72) Erfinder: ROSPONI, Andreas, 25563 Wulfsmoor (DE)
(74) Vertreter: Groth, Wieland

(56) Entgegenhaltungen:
- EP-A1- 2 535 259
- WO-A1-2014/005625
- DE-B3-102007 029 921
- KR-B1- 101 888 486
- KR-B1- 101 970 640
- US-A1- 2018 001 975

## Beschreibung

Die Erfindung betrifft ein Offshore-Solaranlagenfeld. Die Erfindung betrifft auch ein Verfahren zum Aufbau eines Offshore-Solaranlagenfeldes.

Schwimmende Solaranlagen sind bisher allenfalls in geschützten Revieren und Binnenmeeren anzutreffen.

Seegängige Solaranlagen, die auf Pontons angeordnet sind, erzeugen enorme Ankerkräfte, die nur mit sehr teuren und unwirtschaftlich großen Verankerungssystemen abzuleiten wären.

In der WO 2014/005625 A1 ist ein Solaranlagenfeld mit einzelnen schwimmfähigen Solarmodulen offenbart, die jeweils mit mehreren Sockeln in Verbindung stehen.

In der EP 2 535 259 A1 ist ein Solaranlagenfeld mit an den Solarpanelen untereinander verbundenen Einzelmodulen offenbart.

In der DE 10 2007 029921 B3 ist ein Photovoltaikmodul offenbart, mit mehreren Auftriebskörpern, die einen Antrieb aufweisen.

In der US 2018/001975 A1 ist ein Solarmodul offenbart, das an einer schwimmfähigen Plattform angeordnet ist.

In der KR 101 888 486 B1 ist ein Solaranlagenfeld, das auf einem Rahmen angeordnet ist und schwimmfähig ist, beschrieben.

Bei der KR 101 970 640 B1 handelt es sich um eine nationale Patentanmeldung, die nach dem Prioritätstag veröffentlicht wurde und ein Solaranlagenfeld mit einzelnen Solaranlagen, die miteinander gekoppelt sind, offenbart.

Es ist Aufgabe der Erfindung, ein Offshore-Solaranlagenfeld zur Verfügung zu stellen, das geringere Ankerkräfte erzeugt.

Die Aufgabe wird hinsichtlich des Solaranlagenfeldes durch ein eingangs genanntes Offshore-Solaranlagenfeld mit den Merkmalen des Anspruchs 1 gelöst.

Die Aufgabe wird hinsichtlich des Verfahrens durch ein eingangs genanntes Verfahren mit den Merkmalen des Anspruchs 12 gelöst.

Der Erfindung liegt die Idee zugrunde, ein Solaranlagenfeld aus einer Mehrzahl an Solaranlagen mit jeweils einem Auftriebskörper und einem Solarpaneel zur Verfügung zu stellen. Dabei müssen die Auftriebskörper einen hinreichenden Auftrieb erzeugen, um das Solarpaneel oberhalb der Wasserlinie dauerhaft zu halten.

Die Erfindung macht zusätzlich von der Idee Gebrauch, die Solaranlagen voneinander beabstandet anzuordnen und miteinander zu koppeln. Durch die Kopplung der einzelnen Solaranlagen, vorzugsweise der Auftriebskörper der einzelnen Solaranlagen, miteinander, ist es möglich, einen hinreichenden Auftrieb zu erzeugen, eine geringe Wasserlinienfläche der Auftriebskörper auszubilden und dennoch eine hohe Schwimmstabilität zu erzielen.

Einzelne Schwimmkörper haben hierbei nur unzureichenden Stabilitätsumfang, um das Solarpaneel auch bei Wind und Welle aufrecht zu halten. Der erforderliche Stabilitätsumfang wird erst durch die Kopplung mehrerer Schwimmkörper miteinander erreicht.

Grundsätzlich ist es so, dass Auftriebskörper mit einer großen Wasserlinienfläche, wie beispielsweise Pontons, zum einen aufgrund ihres Volumens einen hinreichenden Auftrieb für ein Solarpaneel erzeugen können, zum anderen aufgrund ihrer großen Wasserlinienfläche, das heißt ihrer großen Ausdehnung entlang der Wasserlinie, auch stabil auf dem Wasser aufliegen. Nachteil dieser Pontonsysteme ist es, dass sie erhebliche Ankerkräfte erzeugen.

Die Erfindung macht von der Idee Gebrauch, jeder Solaranlage einen einzelnen Auftriebskörper zuzuordnen, der einen hinreichenden Auftrieb erzeugt, um das der Solaranlage zugeordnete Solarpaneel über der Wasserlinie zu halten.

Die Auftriebskörper können insbesondere senkrecht zum Meeresboden eine große Ausdehnung und entlang der Wasserlinie eine geringe Ausdehnung aufweisen, also zigarrenförmig oder zylinderförmig ausgebildet sein. Man spricht bei diesen Auftriebskörpern auch vorzugsweise von SPAR-Bojen.

Aufgrund der länglichen Ausbildung der SPAR-Bojen ist die Wasserlinienfläche gering bis sehr gering, und damit sind die Ankerkräfte sehr klein. Problematisch bei den SPAR-Bojen mit Solarpaneel ist, dass sie einzeln nicht notwendigerweise aufrecht im Wasser schwimmen oder selbst bei Anordnung eines hinreichenden Ballastes am meeresbodenseitigen Ende des Auftriebskörpers zwar bei geringem Wellengang aufrecht im Wasser stehen, jedoch bei Wellenbewegung sehr leicht kippen. Um das genannte Kippen der einzelnen Solaranlagen zu verhindern, sind die Solaranlagen erfindungsgemäß untereinander gekoppelt.

Die Kopplung besteht erfindungsgemäß aus einer Mischung aus einer starren und einer weichen Kopplung.

Dazu sind die Auftriebskörper vorzugsweise benachbarter Auftriebskörper der Solaranlagen des Solaranlagenfelds miteinander gekoppelt. Die Kopplung besteht aus einer Verbindung sowohl aus starren Streben, die parallel zur Wasserlinie oder diagonal, vorzugsweise kreuzförmig diagonal, zwischen benachbarten Auftriebskörpern angeordnet sind, als auch aus Seilen die parallel zur Wasserlinie oder diagonal oder kreuzförmig diagonal zwischen vorzugsweise benachbarten Auftriebskörpern angeordnet sind.

Bei einer Kopplung durch starre Streben spricht man von einer starren Kopplung, bei einer Kopplung durch Seile von einer weichen Kopplung. Es sind auch Mischungen denkbar, beispielsweise, indem an einem meeresbodenseitigen Ende eine starre Strebe angeordnet wird und eine kreuzförmige Diagonalverstrebung mit Seilen ausgebildet ist. Dadurch kann eine Reihe von Solaranlagen einer Wellenbewegung leicht folgen, und dennoch sind die Solaranlagen auf konstantem Abstand zueinander gehalten. Die starren Streben sind dazu vorzugsweise an die Auftriebskörper gelenkig angelenkt.

Eine starre Strebe kann zwischen zwei benachbarten Auftriebskörpern am meeresbodenseitigen Ende, aber auch entlang der Wasserlinie oder woanders angeordnet sein.

Die Streben und Verbindungen können auch als starre Elemente ausgebildet sein, die eine hydraulische oder pneumatische oder hydropneumatische Vorrichtung beinhalten. Diese kann beispielsweise Winkel zwischen den Komponenten verändern, z. B. statisch, um Wind aus einer Windrichtung zu kompensieren oder dynamisch, um Seegang zu kompensieren. Sie kann auch eine Dämpfung beinhalten, um die Bewegungen der Komponenten zu kontrollieren.

In einer besonders bevorzugten Ausführungsform der Erfindung sind die Solaranlagen in Gruppen angeordnet, und die Solaranlagen einer Gruppe sind stark miteinander gekoppelt, und die Solaranlagen verschiedener Gruppen sind weich miteinander gekoppelt.

Die Solaranlagen sind vorzugsweise in Dreier- oder Vierergruppen, vorzugsweise quadratisch, angeordnet. Die Solaranlagen einer Gruppe sind günstigerweise durch starre Streben, die gelenkig an den Auftriebskörpern angeordnet sind, miteinander verbunden. Dabei können eine horizontale Strebe und zwei Diagonalstreben vorgesehen sein oder auch nur zwei Diagonalstreben oder auch mehrere Horizontalstreben.

Es ist auch denkbar, dass zusätzlich oder statt benachbarter Solaranlagen auch weiter entfernte Solaranlagen miteinander starr gekoppelt werden, beispielsweise können in einem Rechteck angeordnete Solaranlagen derart gekoppelt sein, dass die benachbarten Solaranlagen miteinander starr gekoppelt werden und auch die diagonal angeordneten Solaranlagen ebenfalls miteinander gekoppelt werden.

Vorzugsweise sind die Solaranlagen baugleich. Sie weisen jeweils einen Auftriebskörper und ein Solarpaneel auf. Das Solarpaneel ist vorzugsweise mittels einer Steuerung gelenkig auf dem Auftriebskörper angeordnet. Die Steuerung ist so ausgelegt, dass sie in Winkelstellung und Drehstellung der Sonnenbewegung nachgeführt werden kann.

Besonders bevorzugt sind die Solaranlagen in Doppelreihen angeordnet. Die Doppelreihen können jeweils aus Gruppen von starr gekoppelten Anlagen ausgebildet sein. Die Gruppen sind miteinander weich gekoppelt, das heißt, sie sind mittels Seilen, die horizontal und kreuzweise diagonal verlaufen, miteinander verbunden, oder sie sind miteinander gemischt gekoppelt, das heißt über eine horizontale starre Strebe und diagonal verlaufende Seile miteinander gekoppelt.

Es sind natürlich auch andere Kopplungsarten denkbar; vorzugsweise ist die Gruppe jedoch starr gekoppelt, und benachbarte Gruppen sind miteinander weich oder aus einer Mischung aus starr und weich gekoppelt. Die Doppelreihen sind so weit voneinander beabstandet, dass günstigerweise ein Versorgungs- oder Reparaturschiff zwischen den Doppelreihen hindurchfahren kann, so dass innerhalb des Solaranlagenfeldes jede einzelne Solaranlage von dem Schiff anfahrbar ist.

Die Aufgabe wird hinsichtlich des Verfahrens durch ein Verfahren mit den Merkmalen des Anspruchs 12 gelöst.

Das Verfahren zum Aufbau eines Offshore-Solaranlagenfeldes eignet sich insbesondere zur Durchführung mit einer der obengenannten Offshore-Solaranlagenfelder, umgekehrt kann jedes der obengenannten Offshore-Solaranlagenfelder mit einem der nachfolgenden Verfahren aufgebaut werden.

Das erfindungsgemäße Verfahren zeichnet sich dadurch aus, dass eine Mehrzahl an Solaranlagen mit jeweils einem Auftriebskörper und jeweils einem Solarpaneel voneinander beabstandet werden und miteinander gekoppelt werden.

Besonders bevorzugt werden als Auftriebskörper SPAR-Bojen gewählt oder noch allgemeiner Bojen mit einer länglichen, zigarrenförmigen Form, die einen hinreichenden Auftrieb erzeugen, um das Solarpaneel über Wasser zu halten und dennoch eine geringe Wasserlinienfläche aufweisen.

In den SPAR-Bojen kann an den meeresbodenseitigen Enden Ballast angeordnet werden, der die Solaranlage in einer aufrechten Position im Wasser hält.

Zur Erhöhung der Kippstabilität sind die einzelnen Solaranlagen mit ihren SPAR-Bojen untereinander weich oder starr gekoppelt. Die Kopplungsmechanismen können unterschiedlich ausgebildet werden. Starre Kopplungen können beispielsweise in Form von zwischen den Auftriebskörpern verlaufenden Streben ausgebildet sein, weiche Kopplungen können beispielsweise durch zwischen den Auftriebskörpern verlaufende Seile, insbesondere diagonal verlaufende Seile oder kreuzförmig angeordnete, diagonal verlaufende Seile ausgebildet werden.

Besonders bevorzugt werden defekte Solarpaneele getauscht, indem die Kopplungen an dem dem defekten Solarpaneel zugeordneten Auftriebskörper der Solaranlage gelöst werden, die Solaranlage aus ihrer Position herausgelöst wird und durch eine funktionierende Solaranlage ersetzt wird und die funktionierende Solaranlage mit den benachbarten Solaranlagen gekoppelt wird.

Dabei zeigt
- Fig. 1: eine seitliche Ansicht eines nicht erfindungsgemäßen Offshore-Solaranlagenfeldes,
- Fig. 2: eine Frontansicht des Offshore-Solaranlagenfeldes in Fig. 1 mit einem durchfahrenden Schiff,
- Fig. 3: eine seitliche Ansicht des Offshore-Solaranlagenfeldes in Fig. 1 mit einer durchgehenden Welle,
- Fig. 4: eine Draufsicht des Offshore-Solaranlagenfeldes mit einem durchfahrenden Schiff,
- Fig. 5: eine Gruppe mit vier Solaranlagen,
- Fig. 6: die Gruppe in Fig. 5 in einer seitlichen Ansicht,
- Fig. 7: die Gruppe in Fig. 5 in einer Frontansicht.

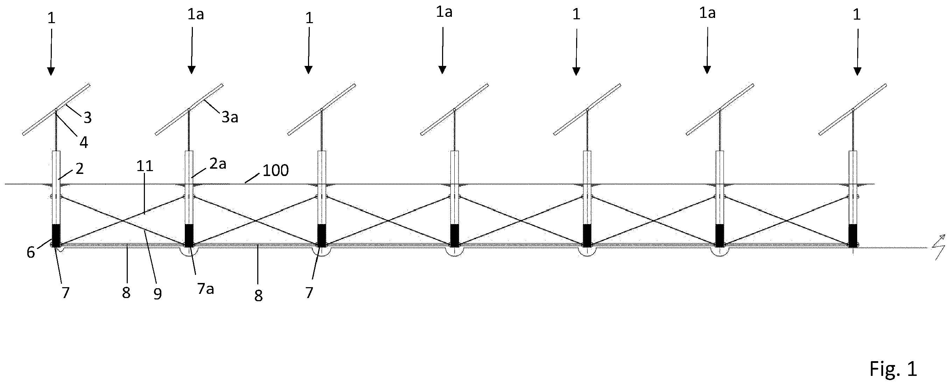

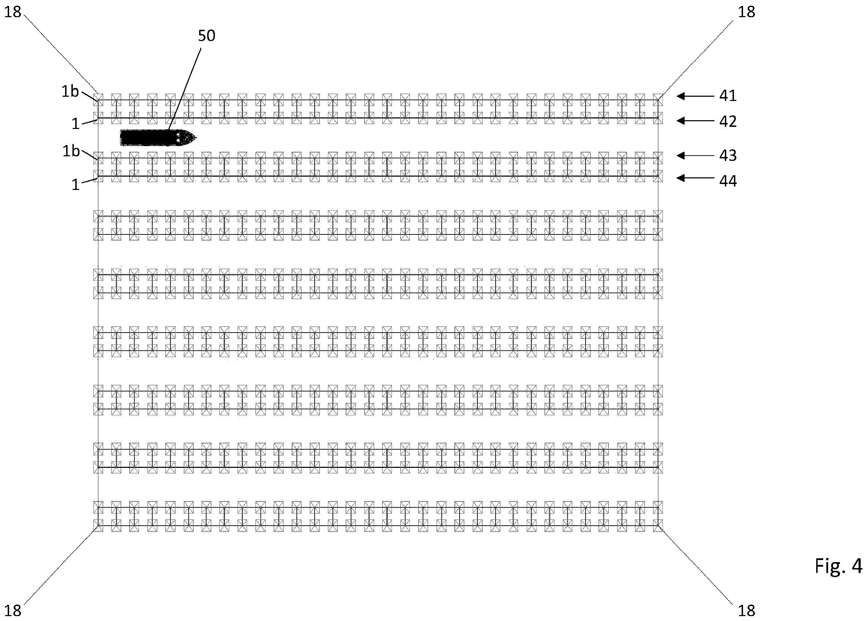

Das in Fig. 4 dargestellte nicht erfindungsgemäße Offshore-Solaranlagenfeld weist eine Mehrzahl an Reihen 41, 42, 43, 44 von Solaranlagen 1, 1a gemäß Fig. 1 auf. In Fig. 1 ist lediglich eine der Reihen 41, 42, 43, 44 von Solaranlagen 1, 1a dargestellt. In Fig. 1 sind die Solaranlagen 1 und die benachbarten Solaranlagen 1a dargestellt. Die Solaranlagen 1 und die benachbarten Solaranlagen 1a sind vorzugsweise baugleich. Jede der Solaranlagen 1 umfasst einen Auftriebskörper 2 sowie ein schwenkbar ausgebildetes Solarpaneel 3. Zwischen dem Auftriebskörper 2 und dem Solarpaneel 3 ist eine Steuerung 4 vorgesehen, die es gestattet, das Solarpaneel 3 in seiner Ausrichtung der Sonne nachzuführen. Das Gleiche gilt für die benachbarten Solaranlagen 1a.

Die Solaranlagen 1, 1a sind untereinander vorzugsweise baugleich ausgebildet. Der Auftriebskörper 2 ist jeweils aus einer sogenannten SPAR-Boje ausgebildet, dabei handelt es sich um einen länglichen, etwa zigarrenförmigen Auftriebskörper 2, der an seinem unteren, dem Meeresboden zugewandten Ende 7 Ballast 6 aufweisen kann, der in seinem Gewicht so bestimmt sein kann, dass jede einzelne Solaranlage 1 einschließlich des Solarpaneels 3 bei ruhigem Wellengang im Wasser aufrecht steht und schwimmt. Es ist jedoch auch denkbar, dass die einzelnen Solaranlagen 1 ohne Kopplungen an benachbarte Solaranlagen 1a nicht aufrecht im Wasser schwimmen.

Entlang einer Reihe 41, 42, 43, 44 von Solaranlagen 1, 1a sind die benachbarten Solaranlagen 1, 1a an ihren jeweiligen meeresbodenseitigen Enden 7, 7a mit einer starren horizontalen Strebe 8 starr miteinander verbunden, wobei die Strebe 8 mit einem ihrer Enden an einem der unteren Enden 7, 7a des Auftriebskörpers 2, 2a gelenkig angebracht ist. Des Weiteren ist der Auftriebskörper 2 mit dem benachbarten Auftriebskörper 2a über Diagonalkopplungen 9, 11 verbunden.

Die Diagonalkopplungen 9, 11 können in Form von Seilen als weiche Kopplung oder in Form von starren Stangen 9, 11 als starre Kopplung ausgebildet sein.

Die an beiden Enden der Reihe 41 angeordneten äußersten Solaranlagen 1 sind mit einer starren Diagonalkopplung 9 mit der benachbarten Solaranlage 1a verbunden sein, damit die äußerste Solaranlage 1 bei Wellengang nicht nach innen auf die benachbarte Solaranlage 1a kippt.

Grundsätzlich ist es auch denkbar, dass die beiden Diagonalkopplungen 9, 11 starr, beispielsweise als Streben ausgebildet sind.

In Fig. 1 ist ein Meeresspiegel 100 eingezeichnet. Die starre horizontale Strebe 8 am meeresbodenseitigen Ende 7 zwischen benachbarten Auftriebskörpern 2, 2a sowie die jeweils zwischen zwei benachbarten Auftriebskörpern 2, 2a angeordneten beiden Diagonalkopplungen 9, 11 sind unterhalb des Meeresspiegels 100 vorgesehen.

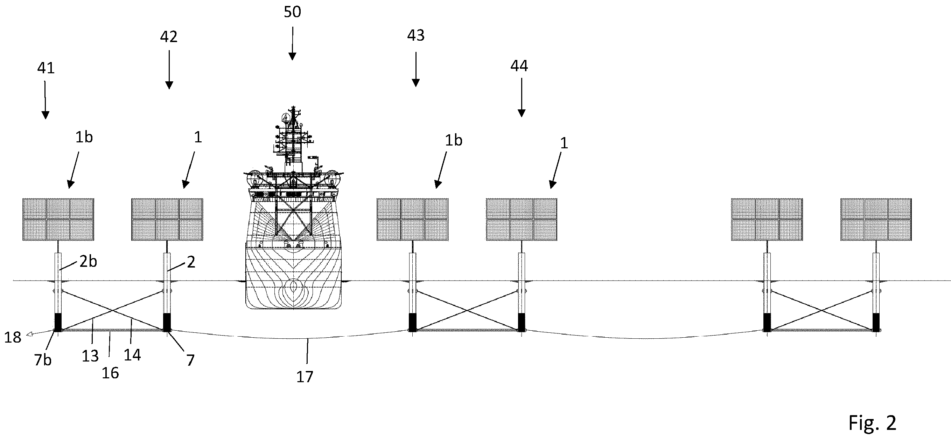

Fig. 2 zeigt die Offshore-Solaranlage der Fig. 1 in einer Frontansicht, die Solaranlagen 1 sind in Doppelreihen 41, 42, 43, 44 angeordnet. Die Solaranlagen 1 einer Reihe 41, 42 einer Doppelreihe 41, 42 sind gemäß Fig. 1 miteinander weich gekoppelt.

Die benachbarten Solaranlagen 1, 1b zweier Reihen 41, 42 sind miteinander gemäß Fig. 2 mittels kreuzförmig angeordneter, diagonaler Streben 13, 14 gekoppelt, die Streben 13, 14 sind starr ausgebildet. Eine weitere meeresbodenseitige horizontale Strebe 16 ist ebenfalls starr ausgebildet. Die Kopplung zwischen den Reihen 41, 42 der Doppelreihe 41, 42 ist daher starr.

Benachbarte Solaranlagen 1, 1b zweier unterschiedlicher Reihen der Doppelreihe 41, 42 bzw 43, 44 sind an ihrem meeresbodenseitigen Ende 7, 7a mit der starren horizontalen Strebe 16 miteinander gekoppelt. Fig. 2 zeigt drei Doppelreihen von Solaranlagen 1, 1b, die zusammen mit weiteren Doppelreihen das Solaranlagenfeld gemäß Fig. 4 ausbilden.

Benachbarte Doppelreihen 41, 42 bzw. 43, 44 sind gemäß Fig. 2 soweit voneinander beabstandet ausgebildet, dass ein Schiff 50, beispielsweise ein Versorgungsschiff, Reparaturschiff o. Ä. zwischen den Doppelreihen 41, 42 bzw. 43, 44 hindurchfahren kann, so dass jede der Solaranlagen 1 des Solaranlagenfeldes direkt mit dem Schiff 50 anfahrbar ist.

Die beiden Doppelreihe 41, 42 sind mit den beiden benachbarten Doppelreihen 43, 44 wiederum durch eine weiche Kopplung 17 verbunden; dabei kann es sich um ein Seil, eine Kette oder Ähnliches handeln. Das gesamte Solaranlagenfeld ist mit einem Anker 18 im Meeresboden verankert. Beispielsweise können in einem in einer Draufsicht rechteckigen Solaranlagenfeld gemäß Fig. 4 die vier an den Ecken angeordneten Solaranlagen mit dem Anker 18 im Meeresboden verankert sein, so dass das gesamte Solaranlagenfeld positionsfest über dem Meeresboden verankert ist.

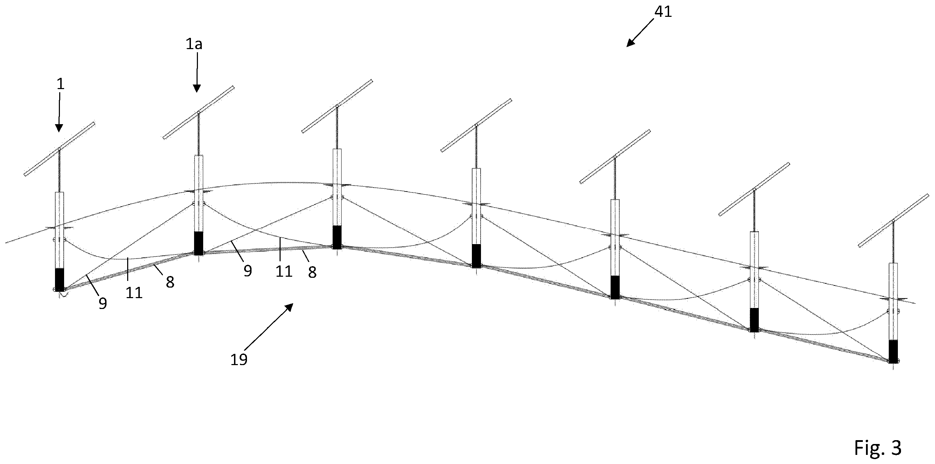

Fig. 3 zeigt dieselbe Ansicht wie Fig. 1, wobei lediglich zusätzlich eine Welle 19 durch das Solaranlagenfeld hindurchläuft. Fig. 3 zeigt, dass die Reihe 41 von Solaranlagen 1, 1a der Wellenbewegung vertikal folgt. Fig. 3 zeigt, dass einige der weichen Diagonalkopplungen 9, 11 durchhängen und andere straff angezogen sind. Die einzelnen Solaranlagen 1, 1a sind hier so ausgebildet, dass sie auch ohne Kopplungen 8, 9, 11 grundsätzlich aufrecht im Wasser stehen würden. Der Wellengang hätte aber zur Folge, dass sie verkippen, und um einem solchen Verkippen entgegenzuwirken, sind die seitlichen Diagonalkopplungen 9, 11 vorgesehen, die die einzelne Solaranlage 1. 1a auch bei Wellengang aufrecht im Wasser halten. Die meeresbodenseitigen starren Streben 8 halten die Solaranlagen 1, 1a auf einem vorbestimmten Abstand zueinander.

Fig. 4 zeigt eine mögliche Konfiguration für ein gesamtes Solaranlagenfeld in einer Draufsicht, die vier Ecksolaranlagen sind über jeweils einen der Anker 18 im Meeresboden verankert und geben damit dem gesamten Solaranlagenfeld Halt.

Das Solaranlagenfeld ist beispielsweise in acht Doppelreihen 41, 42, 43, 44 von Solaranlagen 1, 1a, 1b, 1ba angeordnet. Die Doppelreihen 41, 42 sind mit benachbarten Doppelreihen 43, 44 lediglich an den jeweils beiden endseitigen benachbarten Solaranlagen über die weiche Kopplung 17 in Form eines Seils miteinander verbunden. Die Solaranlagen 1, 1a einer Reihe 42 sind mit Solaranlagen 1b, 1ba der benachbarten Reihe 41 derart gekoppelt, dass Solaranlagen 1, 1a der einen Reihe 42 mit direkt benachbarten Solaranlagen 1b, 1ba der benachbarten Reihe 41 gekoppelt sind. Die Kopplung 13, 14, 16 benachbarter Reihen 41, 42, 43, 44 untereinander ist in Fig. 1 und Fig. 2 dargestellt.

Die Doppelreihen 41, 42 bzw. 43, 44 der Solaranlagen 1, 1a sind so weit voneinander beabstandet, dass das Schiff 50 zwischen zwei Doppelreihen hindurchfahren kann.

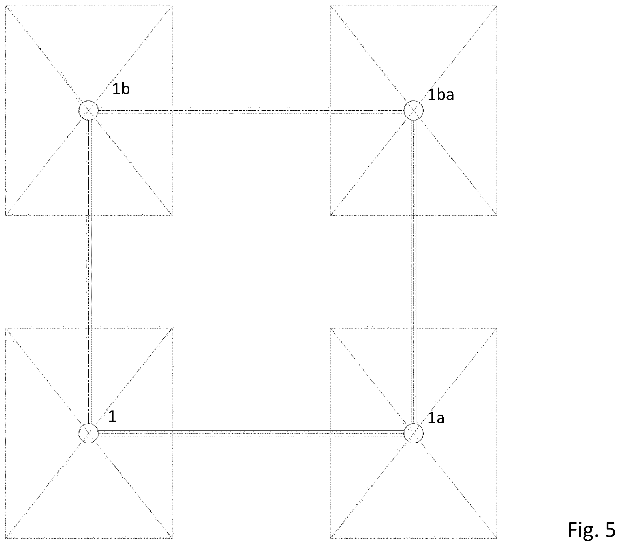

Die Doppelreihen 41, 42, bzw. 43, 44 der Solaranlagen in Fig. 4 sind aus in Reihe angeordneten Vierergruppen von Solaranlagen1, 1a, 1b, 1ba gemäß Fig. 5 aufgebaut.

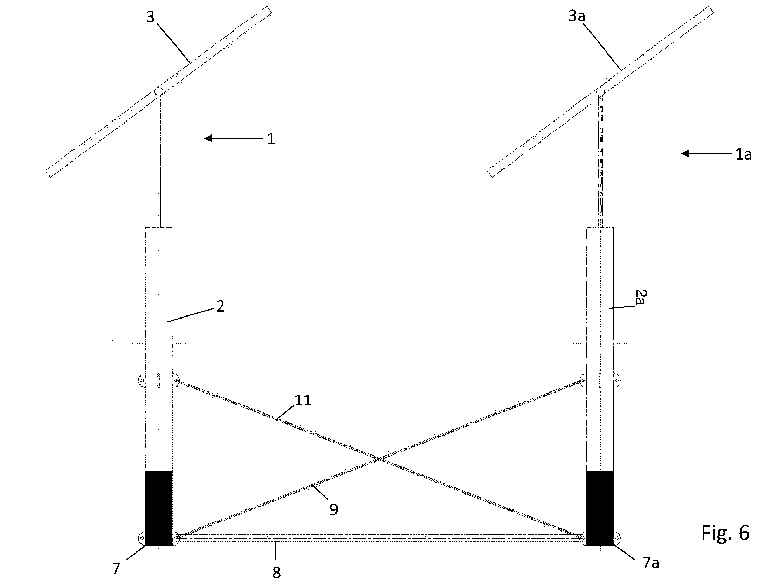

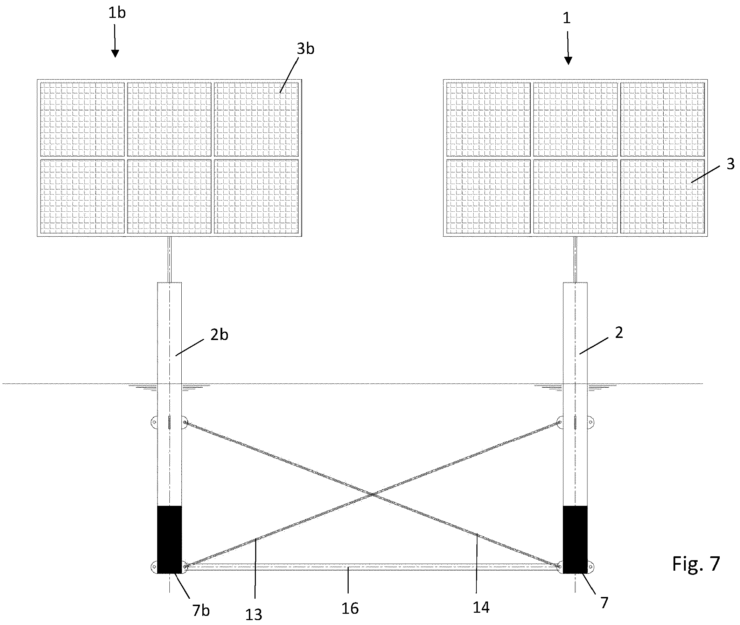

Eine Vierergruppe von Solaranlagen besteht aus vier baugleichen Solaranlagen 1, 1a, 1b, 1ba mit jeweils einer SPAR-Boje als Auftriebskörper 2, 2a und einem meeresbodenabseitig auf der SPAR-Boje angeordneten verschwenkbaren Solarpaneel 3, 3a. Die Vierergruppe von Solaranlagen ist mittels Fig. 6 und Fig. 7 starr miteinander gekoppelt, das heißt, dass am meeresbodenseitigen Ende 7, 7a der Auftriebskörper 2, 2a direkt benachbarte Solaranlagen 1, 1a mit starren Streben 8, 16 gelenkig miteinander verbunden sind und benachbarte Solaranlagen 1, 1a bzw. 1, 1b gemäß Fig. 6 bzw. Fig. 7 mit zwei Diagonalkopplungen 9, 11, bzw. 13, 14, als kreuzförmig angeordnete Streben ausgebildet sind. Alle Diagonalkopplungen 9, 11 bzw. 13, 14 sind meeresbodenseitig von der starren horizontalen Strebe 8 bzw. 16 begleitet. Die Vierergruppe an Solaranlagen 1, 1a 1b, 1ba bildet daher ein starres, schwimmfähiges Gebilde aus.

Die Vierergruppen sind die Bausteine der Doppelreihen 41, 42 bzw. 43, 44 gemäß Fig. 4.

Die diagonale Kopplung unter den Vierergruppen entlang einer Doppelreihe 41, 42 bzw. 43, 44 kann weich sein, das heißt die Auftriebskörper 2, 2a können miteinander zur Wahrung des Abstands mit einer der starren horizontalen Streben 8 verbunden sein; es ist jedoch auch denkbar, dass sie mit einem Seil am meeresbodenseitigen Ende 7, 7a verbunden sind, und benachbarte Solaranlagen 1, 1a können über jeweils eine der kreuzförmig angeordneten Diagonalkopplungen 9, 11 zusätzlich weich miteinander verbunden sein.

Aufgrund der Verankerung der Ecksolaranlagen ist es denkbar, dass benachbarte Vierergruppen weich miteinander gekoppelt sind, also lediglich über Seile miteinander verbunden sind oder über ein Seil und zusätzlich eine der kreuzförmigen Diagonalkopplungen 9, 11 aus Seilen weich miteinander gekoppelt sind, da ihre Längsausdehnung aufgrund der Anker 18 gewahrt bleibt. Es ist jedoch auch denkbar, dass benachbarte Vierergruppen mit einer der starren Streben 8 und mit einer der Diagonalkopplungen 9, 11 weich miteinander gekoppelt sind.

### Bezugszeichenliste

- 1: Solaranlage
- 1a: Solaranlage
- 1b: Solaranlage
- 1ba: Solaranlage
- 2: Auftriebskörper
- 2a: Auftriebskörper
- 2b: Auftriebskörper
- 3: Solarpaneel
- 3a: Solarpaneel
- 3b: Solarpaneel
- 4: Steuerung
- 6: Ballast
- 7: Ende des Auftriebskörpers
- 7a: Ende des Auftriebskörpers
- 7b: Ende des Auftriebskörpers
- 8: Strebe
- 9: Diagonalkopplung, Strebe, Seil

- 11: Diagonalkopplung, Strebe, Seil

- 13: Diagonalkopplung, Strebe, Seil
- 14: Diagonalkopplung, Strebe, Seil
- 16: Strebe
- 17: weiche Kopplung
- 18: Anker
- 19: Welle

- 41: Reihe von Solaranlagen
- 42: Reihe von Solaranlagen
- 43: Reihe von Solaranlagen
- 44: Reihe von Solaranlagen

- 50: Schiff

- 100: Meeresspiegel

## Patentansprüche

1. Offshore-Solaranlagenfeld mit einer Mehrzahl an Solaranlagen (1, 1a, 1b, 1ba) mit jeweils einem Auftriebskörper (2, 2a) und einem Solarpaneel (3, 3a), wobei die Solaranlagen (1, 1a, 1b, 1ba) voneinander beabstandet sind, wobei mehrere Auftriebskörper (2, 2a) der Solaranlagen (1, 1a, 1b, 1ba) miteinander gekoppelt sind, wobei jeder Auftriebskörper (2, 2a) einen hinreichenden Auftrieb erzeugt, das Solarpaneel (3, 3a) über einer Wasserlinie zu halten, **dadurch gekennzeichnet, dass** die Kopplung miteinander gekoppelter Auftriebskörper (2, 2a) diagonale und/oder parallel zur Wasserlinie angeordnete Seile und diagonale und/oder parallel zur Wasserlinie angeordnete starre Streben (9, 11, 13, 14) aufweist.

2. Offshore-Solaranlagenfeld nach Anspruch 1,
**dadurch gekennzeichnet, dass** die Auftriebskörper (2, 2a) eine Längsausdehnung senkrecht zur Wasseroberfläche aufweisen, die größer als jede Ausdehnung des Auftriebskörpers (2, 2a) entlang seiner Wasserlinienfläche ausgebildet ist.

3. Offshore-Solaranlagenfeld nach Anspruch 1 oder 2,
**dadurch gekennzeichnet, dass** die Auftriebskörper (2, 2a) eine zylinderförmige Außenform aufweisen.

4. Offshore-Solaranlagenfeld nach Anspruch 1, 2 oder 3,
**dadurch gekennzeichnet, dass** die Auftriebskörper (2, 2a) als SPAR-Bojen ausgebildet sind.

5. Offshore-Solaranlagenfeld nach einem der vorstehenden Ansprüche,
**dadurch gekennzeichnet, dass** die Auftriebskörper (2, 2a) mittels eines Gestänges miteinander gekoppelt sind.

6. Offshore-Solaranlagenfeld nach einem der vorstehenden Ansprüche,
**dadurch gekennzeichnet, dass** die Auftriebskörper (2, 2a) mittels Seilen miteinander gekoppelt sind.

7. Offshore-Solaranlagenfeld nach einem der vorstehenden Ansprüche,
**dadurch gekennzeichnet, dass** die Auftriebskörper (2, 2a) weich gekoppelt sind.

8. Offshore-Solaranlagenfeld nach einem der vorstehenden Ansprüche,
**dadurch gekennzeichnet, dass** die Auftriebskörper (2, 2a) starr gekoppelt sind.

9. Offshore-Solaranlagenfeld nach einem der vorstehenden Ansprüche,
**dadurch gekennzeichnet, dass** die Auftriebskörper (2, 2a) in Gruppen angeordnet sind und die Auftriebskörper (2, 2a) einer Gruppe starr miteinander gekoppelt sind und die Auftriebskörper (2, 2a) verschiedener Gruppen weich miteinander gekoppelt sind.

10. Offshore-Solaranlagenfeld nach einem der vorstehenden Ansprüche,
**dadurch gekennzeichnet, dass** auf jedem Auftriebskörper (2, 2a) ein Solarpaneel (3, 3a) angeordnet ist.

11. Offshore-Solaranlagenfeld nach einem der vorstehenden Ansprüche,
**dadurch gekennzeichnet, dass** die Auftriebsköper (2, 2a) in Doppelreihen (41, 42, 43, 44) angeordnet sind und zwischen den Doppelreihen (41, 42, 43, 44) ein Fahrweg für ein Schiff (50) ausgebildet ist.

12. Verfahren zum Aufbau eines Offshore-Solaranlagenfeldes, indem
eine Mehrzahl an Solaranlagen (1, 1a, 1b, 1ba) mit jeweils einem Auftriebskörper (2, 2a) und einem Solarpaneel (3, 3a) voneinander beabstandet und mehrere Auftriebskörper (2, 2a) miteinander durch diagonale und/oder parallel zur Wasserlinie angeordnete Seile und diagonale und/oder parallel zur Wasserlinie angeordnete starre Streben (9, 11, 13, 14) gekoppelt werden.

13. Verfahren nach Anspruch 12,
**dadurch gekennzeichnet, dass** die Auftriebskörper (2, 2a) mittels eines Gestänges miteinander gekoppelt werden.

14. Verfahren nach Anspruch 12,
**dadurch gekennzeichnet, dass** die Auftriebskörper (2, 2a) mittels Seilen miteinander gekoppelt werden-.

15. Verfahren nach Anspruch 12,
**dadurch gekennzeichnet, dass** als Auftriebskörper (2, 2a) SPAR-Bojen gewählt werden

16. Verfahren nach einem der Ansprüche 12 bis 15,
**dadurch gekennzeichnet, dass** das defekte Solarpaneel (3, 3a) getauscht wird, indem die Kopplungen an einer Solaranlage (1, 1a) mit dem defekten Solarpaneel (3,3a) zugeordneten Auftriebskörper (2, 2a) gelöst werden und eine Solaranlage (1, 1a) mit einem funktionierenden Solarpaneel (3, 3a) an die Position der Solaranlage (1, 1a) mit dem defekten Solarpaneel (3, 3a) gesetzt wird und die Kopplungen an der Solaranlage (1, 1a) mit dem funktionierenden Solarpaneel (3, 3a) befestigt werden.

## Claims

1. An offshore solar array comprising a plurality of solar arrays (1, 1a, 1b, 1ba) each having a buoyancy body (2, 2a) and a solar panel (3, 3a),
wherein the solar arrays (1, 1a, 1b, 1ba) are spaced apart from each other, wherein a plurality of buoyancy bodies (2, 2a) of the solar arrays (1, 1a, 1b, 1ba) are coupled together, each buoyancy body (2, 2a) generating sufficient buoyancy to keep the solar panel (3, 3a) above a waterline, **characterised in that** the coupling of mutually coupled buoyancy bodies (2, 2a) comprises cables arranged diagonally and/or parallel to the waterline and rigid struts (9, 11, 13, 14) arranged diagonally and/or parallel to the waterline.

2. Offshore solar array according to claim 1,
**characterised in that** the buoyancy bodies (2, 2a) have a longitudinal extension perpendicular to the water surface which is greater than any extension of the buoyancy body (2, 2a) along its waterline surface.

3. Offshore solar array according to claim 1 or 2,
**characterised in that** the buoyancy bodies (2, 2a) have a cylindrical outer shape.

4. Offshore solar array according to claim 1, 2 or 3,
**characterised in that** the buoyancy bodies (2, 2a) are designed as SPAR buoys.

5. Offshore solar array according to one of the preceding claims,
**characterised in that** the buoyancy bodies (2, 2a) are coupled together by means of a linkage.

6. Offshore solar array according to one of the preceding claims,
**characterised in that** the buoyancy bodies (2, 2a) are coupled together by means of ropes.

7. Offshore solar array according to one of the preceding claims,
**characterised in that** the buoyancy bodies (2, 2a) are soft-coupled.

8. Offshore solar array according to one of the preceding claims,
**characterised in that** the buoyancy bodies (2, 2a) are rigidly coupled.

9. Offshore solar array according to one of the preceding claims,
**characterised in that** the buoyancy bodies (2, 2a) are arranged in groups and the buoyancy bodies (2, 2a) of one group are rigidly coupled to one another and the buoyancy bodies (2, 2a) of different groups are soft-coupled to one another.

10. Offshore solar array according to one of the preceding claims,
**characterised in that** a solar panel (3, 3a) is arranged on each buoyancy body (2, 2a).

11. Offshore solar installation array according to one of the preceding claims, **characterised in that** the buoyancy bodies (2, 2a) are arranged in double rows (41, 42, 43, 44) and a travel path for a ship (50) is formed between the double rows (41, 42, 43, 44).

12. A method of constructing an offshore solar array by
spacing apart a plurality of solar arrays (1, 1a, 1b, 1ba) each having a buoyancy body (2, 2a) and a solar panel (3, 3a) and coupling a plurality of buoyancy bodies (2, 2a) to one another by ropes arranged diagonally and/or parallel to the waterline and rigid struts (9, 11, 13, 14) arranged diagonally and/or parallel to the waterline.

13. Method according to claim 12,
**characterised in that** the buoyancy bodies (2, 2a) are coupled together by means of a linkage.

14. Method according to claim 12,
**characterised in that** the buoyancy bodies (2, 2a) are coupled to each other by means of ropes.

15. Method according to claim 12,
**characterised in that** SPAR buoys are selected as buoyancy bodies (2, 2a).

16. Method according to one of claims 12 to 15,
**characterised in that** the defective solar panel (3, 3a) is replaced by releasing the couplings on a solar array (1, 1a) with the buoyancy body (2, 2a) associated with the defective solar panel (3, 3a) and a solar array (1, 1a) with a functioning solar panel (3, 3a) is placed at the position of the solar system (1, 1a) with the defective solar panel (3, 3a) and the couplings are attached to the solar array (1, 1a) with the functioning solar panel (3, 3a).

## Revendications

1. Ferme solaire offshore avec une multitude d'installations solaires (1, 1a, 1b, 1ba) avec chacune un corps portant (2, 2a) et un panneau solaire (3, 3a), cependant que les installations solaires (1, 1a, 1b, 1ba) sont espacées l'une de l'autre, cependant que plusieurs corps de flottaison (2, 2a) sont couplés l'un à l'autre, cependant que chaque corps de flottaison (2, 2a) génère une poussée suffisante à maintenir le panneau solaire (3, 3a) au-dessus d'une ligne de flottaison, **caractérisé en ce que** le couplage de corps de flottaison couplés l'un à l'autre (2, 2a) présente des câbles diagonaux et/ou parallèles à la ligne de flottaison et des barres diagonales et/ou des barres rigides (9, 11, 13, 14) placées parallèlement à la ligne de flottaison.

2. Ferme solaire offshore selon la revendication 1,
**caractérisé en ce que** les corps de flottaison (2, 2a) présentent une extension longitudinale perpendiculairement à la surface de l'eau qui est supérieure à chaque extension du corps de flottaison (2, 21) formée le long de sa surface de ligne de flottaison.

3. Ferme solaire offshore selon la revendication 1 ou 2,
**caractérisé en ce que** les corps de flottaison (2, 2a) présentent une forme extérieure cylindrique.

4. Ferme solaire offshore selon la revendication 1, 2 ou 3,
**caractérisé en ce que** les corps de flottaison (2, 2a) sont configurés comme des bouées SPAR.

5. Ferme solaire offshore selon l'une des revendications précédentes,
**caractérisé en ce que** les corps de flottaison (2, 2a) sont couplés l'un à l'autre au moyen d'une tringlerie.

6. Ferme solaire offshore selon l'une des revendications précédentes,
**caractérisé en ce que** les corps de flottaison (2, 2a) sont couplés l'un à l'autre au moyen de câbles.

7. Ferme solaire offshore selon l'une des revendications précédentes,
**caractérisé en ce que** les corps de flottaison (2, 2a) sont couplés de manière souple.

8. Ferme solaire offshore selon l'une des revendications précédentes,
**caractérisé en ce que** les corps de flottaison (2, 2a) sont couplés de manière rigide.

9. Ferme solaire offshore selon l'une des revendications précédentes,
**caractérisé en ce que** les corps de flottaison (2, 2a) sont placés en groupes et les corps de flottaison (2, 2a) d'un groupe sont couplés de manière rigide l'un à l'autre et les corps de flottaison (2, 2a) de différents groupes sont couplés de manière souple l'un à l'autre.

10. Ferme solaire offshore selon l'une des revendications précédentes,
**caractérisé en ce qu'**un panneau solaire (3, 3a) est placé sur chaque corps de flottaison (2, 2a).

11. Ferme solaire offshoreselon l'une des revendications précédentes,
**caractérisé en ce que** les corps de flottaison (2, 2a) sont placés en doubles rangées (41, 42, 43, 44) et qu'une voie de circulation pour un navire (50) est formée entre les doubles rangées (41, 42, 43, 44).

12. Procédé pour constituer une ferme solaire offshore, cependant qu'une multitude d'installations solaires (1, 1a, 1b, 1ba) avec chacune un corps de flottaison (2, 2a) et un panneau solaire (3, 3a) sont espacées l'une de l'autre et plusieurs corps de flottaison (2, 2a) sont couplés l'un à l'autre par des câbles diagonaux et/ou parallèles à la ligne de flottaison et des barres diagonales et/ou rigides (9, 11, 13, 14) placées parallèlement à la ligne de flottaison.

13. Procédé selon la revendication 12,
**caractérisé en ce que** les corps de flottaison (2, 2a) sont couplés l'un à l'autre au moyen d'une tringlerie.

14. Procédé selon la revendication 12,
**caractérisé en ce que** les corps de flottaison (2, 2a) sont couplés l'un à l'autre au moyen de câbles.

15. Procédé selon la revendication 12,
**caractérisé en ce que** les corps de flottaison (2, 2a) sont configurés comme des bouées SPAR.

16. Procédé selon l'une des revendications 12 à 15,
**caractérisé en ce que** le panneau solaire défectueux (3, 3a) est remplacé, cependant que les couplages de corps de flottaison (2, 2a) sur une installation solaire (1, 1a) avec le panneau solaire défectueux (3, 3a) sont détachés et une installation solaire (1, 1a) avec un panneau solaire qui fonctionne (3, 3a) est mis à la position de l'installation solaire (1, 1a) avec le panneau solaire défectueux (3, 3a) et les couplages sont fixés à l'installation solaire (1, 1a) avec le panneau solaire qui fonctionne (3, 3a).
